# DEMANDE DE BREVET EUROPEEN

(11) **EP 0 557 156 A1**
(43) Date de publication de la demande: **25.08.1993**
(21) Numéro de dépôt: 93400312.0
(22) Date de dépôt: 08.02.1993
(51) Int. Cl.: B01J 20/04, B01D 53/28

(54) **Produit pour la déshumidification d'un gaz**

(30) Priorité: 19.02.1992 FR 9201980
(71) Demandeur: INSTITUT FRANCAIS DU PETROLE, F-92502 Rueil-Malmaison (FR)
(72) Inventeur: Morlec, Jean, F-44600 Saint Nazaire (FR); Hamon, Christian, F-44600 Saint Nazaire (FR)

(57) **Abrégé**

L'invention concerne un produit pour ôter l'humidité d'un gaz, et notamment de l'air.

Le produit pour la déshumidification d'un gaz est constitué d'une zéolithe ou d'une argile broyée, imprégnée d'un sel hydrophile, le produit étant séché et de préférence enfermé dans un sachet microporeux.

## Description

L'invention concerne un produit pour ôter l'humidité d'un gaz, et notamment de l'air. Le produit pour la déshumidification d'un gaz est constitué d'une zéolithe ou d'une argile broyée, imprégnée d'un sel hydrophile, le produit étant séché et de préférence enfermé dans un sachet microporeux.

Plus précisément l'invention concerne un produit pour la déshumidification d'un gaz contenant :
(a) au moins un solide choisi dans le groupe constitué par une zéolithe naturelle ou de synthèse et une argile et
(b) au moins un sel d'imprégnation choisi dans le groupe constitué par les halogénures de métaux alcalins ou alcalino-terreux.

L'invention concerne également un matériel pour la déshumidification d'un gaz, contenant un produit à base d'au moins une zéolithe naturelle ou de synthèse, ou d'une argile, (ou leurs mélanges), ledit produit étant enfermé dans un sachet microporeux, une enveloppe individuelle de protection étanche, entourant la masse ensachée.

Le produit est destiné principalement aux besoins domestiques, plaisance, caravaning et emballages industriels (aéronautique, automobile, marine, armement, appareillage électrique, électronique, matériel de télécommunication, optique, appareils de mesure), mais peut aussi s'envisager pour le traitement de l'air des gaines de ventilation.

Les usages habitation, caravaning et plaisance utilisent largement le chlorure de calcium, qui pour un prix dix fois moindre que les tamis moléculaires zéolithes de synthèse A ou X) ou les silicagels, offre un rapport poids d'eau / sur poids de produit trois fois plus important, mais présente l'inconvénient majeur de délivrer un slurry déliquescent corrosif qui impose des précautions d'emploi contraignantes.

Les autres produits, utilisés en particulier dans l'emballage et les stockages sont généralement constitués par les zéolithes de synthèse, les argiles, le silicagel, qui sont commercialisés en sachets de microporeux de différentes capacités.

Ils obéissent à la norme NF H00-321 qui prévoit également un conditionnement dans des emballages assurant une conservation assurant une conservation pendant une durée de trois mois après livraison, à n'ouvrir qu'au moment de l'emploi et à refermer après chaque prélèvement.

Chaque emballage contient de nombreux sachets, et à chaque ouverture pour prélever un sachet, de l'humidité entre dans l'emballage. Les masses de captation voient donc rapidement diminuer leur efficacité.

Une autre norme NF H00-320 prévoit un test de réactivation qui a pour objet de vérifier l'aptitude du produit à retrouver des caractéristiques proches de ses caractéristiques initiales en vue d'une nouvelle utilisation. Cette aptitude doit être de 90 % après deux cycles.

En outre, la norme NF H00-320, prévoit un essai de corrosion qui a pour but de vérifier que le produit déhydratant ne présente pas d'action corrosive redhibitoire sur les matériaux métalliques les plus couramment utilisés.

La demanderesse a trouvé un produit nouveau présentant une durée de vie plus longue, des performances de l'adsorption maximales aux conditions proches de l'utilisation (à 20° C et à moins de 40 % d'humidité relative) et facilement régénérable avec une efficacité supérieure.

Plus précisément, le produit obtjet de la présente invention peut contenir un produit minéral naturel, clinoptilolite ou sépiolite par exemple, imprégné partiellement de sel d'imprégnation (hydrophile), comme un halogénure de métal alcalin ou alcalino-terreux, et notamment le chlorure de calcium ou de lithium. De préférence le produit, de granulométrie convenable est enfermé dans un sachet microporeux adéquat, et est séché par exemple sous micro-ondes et sous pression réduite assurant une déshydratation rapide optimale. Généralement, ensuite, pour son utilisation, sous atmosphère sèche, le produit est enfermé dans une enveloppe individuelle de protection, étanche à l'air entourant la masse ensachée.

L'invention a également pour objet un procédé complet pour la préparation dudit produit et dans lequel :
- un support minéral est broyé et calibré,
- les granulés sont imprégnés d'une solution de sel,
- ledit produit obtenu est essoré et séché partiellement,
- on dépose une quantité déterminée de granulés dans un sachet de matériau microporeux que l'on peut fermer par exemple par couture ou mieux par thermo-soudure,
- on soumet le sachet contenant le déshydratant à l'action par exemple des micro-ondes dans une enceinte à pression réduite,
- on entoure sous atmosphère contrôlée le sachet déshydratant d'une enveloppe de protection imperméable à l'humidité et que l'on ferme.

Le produit selon l'invention ne produit pas de fines.

Le produit minéral peut être aussi choisi dans le groupe constitué par une argile naturelle comme la sépiolite, une zéolithe naturelle comme la mordénite ou la clinoptilolite ou la chabazite ou le philipsite ou une zéolithe de synthèse de type A ou X, éventuellement Y, ou ZSM.

Le sel d'imprégnation peut être du chlorure de calcium ou de lithium ou un mélange des deux. De préférence la teneur en sel d'imprégnation est comprise entre 0,5 et 10 % en poids par rapport à la masse totale dudit produit, plus particulièrement entre 3 et 8 %, voire entre 3,5 et 5 %.

L'invention concerne donc également un procédé pour l'obtention d'un matériel dans lequel :
a- on broie et tamise un granulat en vue d'obtenir des granulés.
b- on imprègne les granulés d'un sel hydrophile,
c- on essore et sèche les granulés,
d- on dépose une quantité déterminée d'un argile ou d'une zéolithe dans un sachet microporeux que l'on ferme,
e- on soumet l'ensemble, granulés et sachet à l'action par exemple des micro-ondes dans une enceinte sous vide de façon à déshydrater le produit,
f) on entoure rapidement le sachet contenant le produit déshydratant d'une enveloppe de protection imperméable à l'humidité, que l'on ferme.

Un support minéral (granulat) est broyé en granulés de taille optimale, assurant une bonne surface d'échange mais en éliminant les particules fines par tamisage efficace.

Tout moyen de broyage et de tamisage classiques conviennent.

Les granulés installés dans des paniers de toile métallique sont immergés dans une solution idoine le temps nécessaire au traitement, puis essorés par égouttage ; ensuite ils peuvent passer dans un tunnel de séchage.

Les granulés imprégnés et séchés sont déversés dans des sachets de tissu microporeux, en quantité prédéterminée selon les besoins, par exemple 15 à 500 g par sachet.

Le matériau constituant le sachet microporeux doit laisser passer le gaz et la vapeur d'eau mais retenir les granulats. Il est choisi également, selon l'invention, pour son inertie au chauffage par micro-ondes.

Un papier végétal armé de polyester convient bien, et doit pouvoir être thermosoudable.

Le sachet est fermé, selon des moyens classiques, à ultra-son par exemple.

Les sachets passent ensuite dans une enceinte sous pression réduite, par exemple sous champ de micro-ondes dans la bande par exemple de 915 à 2450 MHz.

Sous l'effet des micro-ondes, la température de l'eau augmente, l'eau s'évapore et s'échappe dans l'atmosphère de l'enceinte à travers le matériau du sachet, le système de vide l'évacue, sans que la température du sachet et des granulats dépasse les 60° C de limite d'utilisation du microporeux.

La fréquence des micro-ondes et la pression de l'enceinte sont généralement choisis pour que le temps de séjour nécessaire à la déshydratation du système soit la plus rapide possible.

Il résulte du choix des micro-ondes travaillant sous-vide partiel comme moyen de séchage, combiné au choix du matériau constituant le sachet, que le produit déshydratant déjà conditionné en sachet peut être traité : le sachet n'est pas dégradé, la vapeur d'eau s'échappe librement et le sachet peut immédiatement être mis sous enveloppe protectrice à l'étape finale.

Un autre procédé pour réaliser le produit conforme à l'invention consiste, de façon classique à calciner à 300° C environ les substances constituant la masse de captation, de les refroidir dans un courant d'air, puis de les placer dans les sachets microporeux.

Selon l'invention, chaque sachet microporeux obtenu et contenant le déshydratant (ou produit selon l'invention) est immédiatement entouré d'une enveloppe.

L'enveloppe est constituée par un matériau imperméable à l'humidité de l'air (feuille plastique, papier plastifié, feuille d'aluminium, etc...).

Elle est hermétiquement fermée. On obtient ainsi une enveloppe étanche.

L'enveloppe assure la protection du déshydratant actif contre l'humidité. Sans elle, le produit se réhydraterait rapidement. Il est bien évident que l'opération de conditionnement dans l'enveloppe a lieu dans une atmosphère aussi sèche que possible.

Le matériau constituant l'enveloppe doit être suffisamment résistant mécaniquement vis à vis des conditions dans lesquelles sera manipulé le produit. A ce sujet, un chapitre particulier de la norme NF H00-321 précise les conditions de test de résistance mécanique et de tenue à basse température (- 40° C).

Conformément à la norme NF H00-321, un marquage explicite et durable, avec en option un marquage coloré (bleu/rose) sensible et vivant à une valeur d'humidité relative donnée, sera effectué sur la chaîne.

L'utilisateur n'a alors plus qu'à ouvrir l'enveloppe à l'aide de moyens de la vie courante (ciseaux, cutter...) ou selon la fabrication en tirant le fil d'ouverture prévu à cet effet, et placer le sachet dans l'enceinte à traiter.

L'atmosphère de l'enceinte à traiter diffuse à travers le sachet microporeux et l'humidité qu'elle contient est retenue sur le produit.

Lorsque les granulés sont saturés, il suffit de placer le sachet par exemple dans un four micro-ondes (de cuisine, par exemple) quelques minutes, pour le déshydrater et le réactiver avant une nouvelle utilisation.

L'invention permet donc en outre d'obtenir un produit régénérable et de meilleure efficacité du fait qu'il contient un produit activé, qui n'a pas été au contact de l'humidité avant son utilisation.

## Revendications

1. Produit pour la déshumidification d'un gaz contenant
(a) au moins un solide choisi dans le groupe constitué par une zéolithe naturelle ou de synthèse et une argile et
(b) au moins un sel d'imprégnation choisi dans le groupe constitué par les halogénures de métaux alcalins ou alcalino-terreux.

2. Produit selon la revendication 1 dans lequel la teneur en halogénure est comprise entre 0,5 et 10 % en poids par rapport à la masse totale dudit produit.

3. Produit selon la revendication 2 dans lequel ladite teneur est comprise entre 3 et 8 %.

4. Produit selon l'une des revendications 1 à 3 dans lequel ledit solide est choisi dans le groupe constitué par une zéolithe naturelle (par exemple la clinoptilolite ou la chabazite, ou une mordénite, ou la philipsite), une argile naturelle (par exemple la sépiolite), une zéolithe de synthèse, (par exemple une zéolithe A, une zéolithe X, une zéolithe Y, une ZSM).

5. Produit selon l'une des revendications 1 à 4 dans lequel le sel d'imprégnation est du chlorure de calcium ou du chlorure de lithium ou un mélange de ces chlorures.

6. Matériel pour la déshumidification d'un gaz, contenant un produit selon l'une des revendications 1 à 5, à base d'au moins une zéolithe naturelle ou de synthèse, ou d'une argile, (ou leurs mélanges), ledit produit étant enfermé dans un sachet microporeux, une enveloppe individuelle de protection étanche, entourant la masse ensachée.

7. Produit selon l'une des revendications 1 à 5 ou matériel selon la revendication 6 pour la déshumidification de l'air.

8. Procédé pour l'obtention d'un matériel selon la revendication 6, dans lequel :
a- on broie et tamise un granulat en vue d'obtenir des granulés.
b- on imprègne les granulés d'un sel hydrophile,
c- on essore et sèche les granulés,
d- on dépose une quantité déterminée d'un argile ou d'une zéolithe dans un sachet microporeux que l'on ferme,
e- on soumet l'ensemble, granulés et sachet à l'action par exemple des micro-ondes dans une enceinte sous vide de façon à déshydrater le produit,
f) on entoure rapidement le sachet contenant le produit déshydratant d'une enveloppe de protection imperméable à l'humidité, que l'on ferme.

9. Procédé selon la revendication 8, dans lequel le sachet contenant les granulés sèches est placé dans une enveloppe imperméable à l'humidité, puis ladite enveloppe est fermée.
